# FASCICULE DE BREVET EUROPEEN

(11) **EP 2 443 668 B1**
(45) Date de publication et mention de la délivrance du brevet: **14.12.2016**
(21) Numéro de dépôt: 10734265.1
(22) Date de dépôt: 17.06.2010
(51) Int. Cl.: H02S 20/25

(54) **TUILE PHOTOVOLTAÏQUE POUR TOITURE**
FOTOVOLTAIK-DACHZIEGEL
PHOTOVOLTAIC ROOF TILE

(30) Priorité: 17.06.2009 FR 0954068
(43) Date de publication de la demande: 25.04.2012
(73) Titulaire: SUPERDOME SARL, 2138 Luxembourg (LU)
(72) Inventeur: AZOULAY, Alexandre, F-75008 Paris (FR)
(74) Mandataire: Thinat, Michel
(86) Numéro de dépôt international: PCT/FR2010/051219
(87) Numéro de publication internationale: WO 2011/004092

(56) Documents cités:
- EP-A1- 2 072 708
- EP-A2- 0 825 654
- EP-A2- 0 884 432
- DE-A1- 3 314 637
- DE-A1- 3 822 066
- DE-A1- 10 020 429
- DE-U1- 20 013 940
- DE-U1- 29 609 816
- DE-U1- 29 915 648
- FR-A1- 2 384 913
- US-A1- 2003 111 103

## Description

La présente invention est relative aux tuiles photovoltaïques pour toiture.

Plus particulièrement, l'invention concerne une tuile photovoltaïque pour toiture comportant une pluralité desdites tuiles dont au moins deux tuiles adjacentes se chevauchent au moins partiellement, comprenant :
- un corps ayant des bords de chevauchement constituant un bord de dessus et un bord de dessous, le bord de dessus étant conformé pour recouvrir le bord de dessous d'au moins l'une des tuiles adjacentes,
- une couche photovoltaïque placée sur une partie libre de la face supérieure du corps hors du bord de dessous et
- des connecteurs électriques qui sont reliés à la couche photovoltaïque par l'intermédiaire de conducteurs électriques pour connecter électriquement entre elles les couches photovoltaïques d'au moins deux des tuiles adjacentes de la toiture.

Ce genre de tuile est connu du document NL1005287 ou du document DE29915648 dans chacun desquels la tuile photovoltaïque comporte des connecteurs dont la connexion nécessite une manipulation précise des tuiles pour éviter leur détérioration.

La présente invention a notamment pour but de remédier aux inconvénients de l'art antérieur.

A cet effet, l'invention a pour objet une tuile photovoltaïque pour toiture comportant une pluralité desdites tuiles dont au moins deux tuiles adjacentes se chevauchent au moins partiellement, comprenant un corps ayant des bords de chevauchement constituant un bord de dessus et un bord de dessous, le bord de dessus étant conformé pour recouvrir le bord de dessous d'au moins l'une des tuiles adjacentes, une couche photovoltaïque placée sur une partie libre de la face supérieure du corps hors du bord de dessous et des connecteurs électriques qui sont reliés à la couche photovoltaïque par l'intermédiaire de conducteurs électriques pour connecter électriquement entre elles les couches photovoltaïques d'au moins deux des tuiles adjacentes de la toiture. Dans cette tuile, les connecteurs électriques sont aménagés dans des éléments d'assemblage par emboîtement aménagés sur les bords de chevauchement pour permettre auxdits bords de chevauchement un positionnement mutuel lors de la pose de deux des tuiles adjacentes de manière que, par l'emboîtement des éléments d'assemblage, les connecteurs électriques viennent en contact électrique les uns avec les autres.

Grâce à ces dispositions, les mêmes parties de la tuile servent tant à la fonction connexion électrique qu'à la fonction de maintien en position mutuelle des tuiles adjacentes.

Dans divers modes de réalisation de la tuile selon l'invention, on peut éventuellement avoir recours en outre à l'une et/ou à l'autre des dispositions suivantes :
- les conducteurs sont internes au corps de la tuile dans leur parcours entre la couche photovoltaïque et leur connecteur électrique ;
- les éléments d'assemblage par emboîtement comprennent d'une part au moins un plot qui est en saillie de l'un du bord de dessus ou du bord de dessous et d'autre part au moins un logement en retrait dans l'autre du bord de dessous ou du bord de dessus, les connecteurs électriques étant en retrait dans leur plot et de leur logement ;
- le plot forme une fiche en saillie de son bord de chevauchement et le logement forme une prise aménagée en retrait de son bord de chevauchement ;
- le plot et le logement sont sensiblement perpendiculaires au plan médian de la tuile, ce plan étant prévu pour être parallèle au plan d'un pan de toiture recevant la tuile ;
- la couche photovoltaïque est directement au contact de l'environnement ;
- la couche photovoltaïque est un film collé au corps de la tuile par l'intermédiaire d'une colle souple permettant d'absorber des dilatations différentielles entre le corps et le film ;
- le film constituant la couche photovoltaïque est logé dans une cavité en retrait de la face supérieure du corps à sa partie libre, la profondeur de la cavité étant telle que la face supérieure du film soit en affleurement d'une partie périphérique de la partie libre de la face supérieure du corps ;
- la face supérieure du corps, dans sa zone recouverte par le film photovoltaïque, est au moins partiellement creusée de canaux de refroidissement permettant localement un passage d'air entre le corps et le film photovoltaïque ;
- les canaux de refroidissement sont des stries et le corps détermine des conduits d'évacuation d'air débouchant d'une part dans l'une des stries et d'autre part à la face inférieure de la tuile ;
- la couche photovoltaïque est une couche de nanoparticules photovoltaïques ;
- le corps de la tuile est en matériau à base de polymère, par exemple chargé céramique, ou en matériau à base de bois ;
- le corps est à base de matériau adapté à polymériser au refroidissement après moulage ou lors d'un formage sous pression ;
- la face supérieure du corps de la tuile est recouverte d'une couche minérale de protection notamment aux rayons ultra violets ;
- la tuile comporte une couche thermiquement isolante sur la face inférieure du corps ;
- la couche thermiquement isolante est recouverte d'une couche de finition inférieure ;
- le corps comporte une demi-coquille supérieure et une demi-coquille inférieure déterminant un espace intérieur ;
- l'espace intérieur entre la demi-coquille supérieure et la demi-coquille inférieure est rempli d'une mousse ;
- le corps renferme au moins une couche thermiquement isolante interne ;
- le corps renferme un boîtier électronique de convertisseur de courant continu en courant alternatif.

Par ailleurs, l'invention a également pour objet un procédé de fabrication d'une tuile photovoltaïque conforme à l'invention, le procédé comportant une étape de positionnement dans un moule des conducteurs dont au moins une extrémité est pourvue d'un connecteur électrique et une étape de moulage du corps de la tuile dans le moule renfermant les conducteurs.

Selon un mode de réalisation, ce procédé comporte une étape de positionnement d'une couche photovoltaïque dans le moule avant l'étape de moulage du corps.

Selon un autre mode de réalisation, ce procédé comporte une étape de positionnement d'une couche photovoltaïque sur la face supérieure du corps après l'étape de moulage et après une étape de démoulage du corps.

Selon d'autres caractéristiques, le procédé comporte, après la pose sur un pan de charpente d'au moins une première desdites tuiles une étape d'approche d'une deuxième tuile afin de positionner son bord de dessus en regard du bord de dessous de la première tuile et une étape de pose de la deuxième tuile adjacente à la première tuile en l'approchant sensiblement perpendiculairement au plan dudit pan de charpente avec d'une part superposition du bord de dessus de la deuxième tuile sur le bord de dessous de la première tuile et d'autre part emboîtement sensiblement perpendiculairement audit pan de charpente des éléments d'assemblage par emboîtement pour maintenir mécaniquement lesdites tuiles et les connecter électriquement.

Par ailleurs, l'invention a également pour objet un ensemble de recouvrement pour toiture, comportant une pluralité de tuiles photovoltaïques conformes à l'invention posées adjacentes, le bord de dessus de l'une des tuiles recouvrant le bord de dessous d'au moins l'une des tuiles adjacentes en ayant leurs connecteurs électriques connectés électriquement.

D'autres buts, caractéristiques et avantages de l'invention apparaîtront au cours de la description suivante de plusieurs modes de réalisation, donnés à titre d'exemples non limitatifs, en regard des dessins joints, sur lesquels :
- la figure 1 est une vue en perspective, de type vue en plongée, d'une tuile photovoltaïque selon l'invention ;
- la figure 2 est une vue en coupe longitudinale partielle de la tuile conforme l'invention, selon la ligne II-II de la figure 1, montrant ses éléments d'assemblage par emboîtement et ses connecteurs électriques ;
- la figure 3 est une vue de dessus de la tuile de la figure 1 ;
- les figures 4 à 6 sont des coupes transversales de la tuile, respectivement selon les lignes IV-IV à VI-VI de la figure 3 ;
- la figure 7 est une vue en perspective montrant un assemblage d'une pluralité des tuiles telles que représentées à la figure 1 ;
- la figure 8 est une vue en perspective, de type vue en contre plongée, de la tuile représentée à la figure 1 ;
- la figure 9 est une vue partielle en perspective montrant en détail un connecteur électrique de la tuile telle que représentée à la figure 1 ;
- la figure 10 est une vue partielle en perspective montrant en détail un connecteur électrique de la tuile telle que représentée à la figure 8 ;
- les figures 11 et 12 sont des vues montrant les polarités et le câblage de tuiles conformes à celle représentée aux figures 1 à 10 ;
- la figure 13 est une vue du type de la figure 3 pour une variante de réalisation des conducteurs internes d'une tuile selon l'invention ;
- les figures 14 et 15 sont des vues montrant les polarités et le câblage de tuiles conformes à celle représentée à la figure 13 ;
- la figure 16 est une vue en perspective, de type vue en plongée, d'une variante plane de réalisation de la tuile du type de celle de la figure 1 ;
- la figure 17 est une vue en perspective, de type vue en plongée, d'une variante fine de réalisation de la tuile du type de celle de la figure 1 ;
- la figure 18 est une vue en coupe selon un plan longitudinal perpendiculaire à la face photovoltaïque d'une tuile selon l'invention, montrant une variante de réalisation du corps de la tuile et de ses de connecteurs ;
- la figure 19 est une vue partielle en perspective montrant en détail un connecteur électrique de la tuile telle que représentée à la figure 18, en plongée ;
- la figure 20 est une vue partielle en perspective montrant en détail un connecteur électrique de la tuile telle que représentée à la figure 18, en contre plongée ;
- les figures 21 et 22 sont des vues en coupe selon un plan longitudinal perpendiculaire à la face photovoltaïque de la tuile, montrant des variantes de réalisation du corps de la tuile de la figure 18.

Sur les différentes figures, les mêmes références désignent des éléments identiques ou similaires.

Dans les modes de réalisation de l'invention représentés aux figures, la tuile photovoltaïque 10 comporte un corps ondulé 12, dont les faces d'extrémités latérales droite 16 et gauche 14 coupent, à moitié de leur hauteur, un plan P médian audit corps 12. La tuile ondulée est sinusoïdale, si bien que le plan médian P passe par l'axe correspondant à l'axe des abscisses de cette sinusoïde, c'est-à-dire que le plan P est à mi hauteur de la tuile et parallèle aux plans passant par les sommets de la tuile. Ainsi, le plan P est parallèle au plan du pan de la charpente sur lequel la tuile est posée quand elle est intégrée à une toiture.

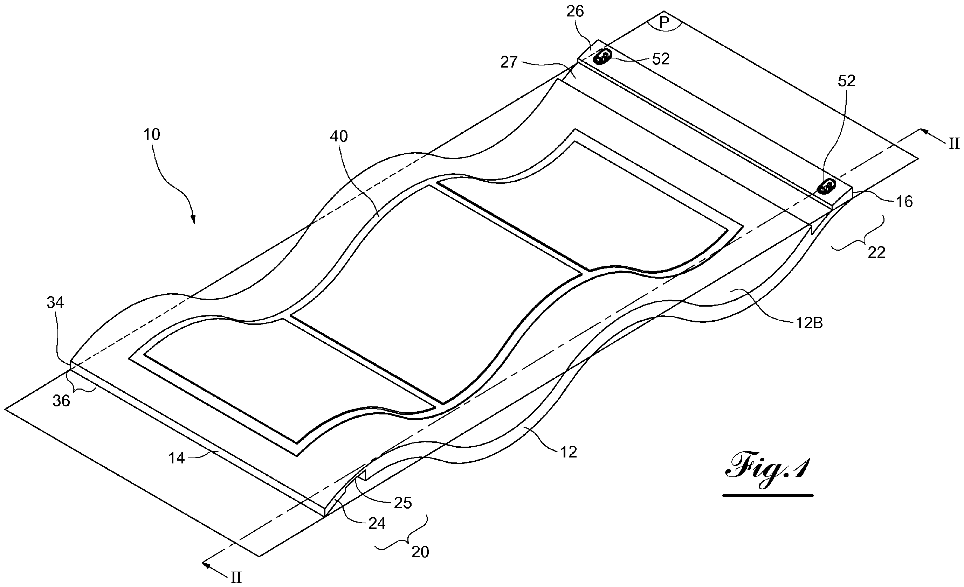

A des portions d'extrémités latérales, le corps 10 comporte des bords de chevauchement constituant un bord de dessus 20 et un bord de dessous 22, le bord de dessus étant conformé pour recouvrir le bord de dessous d'au moins l'une des tuiles adjacentes de la toiture. Le bord de dessus 20 est à gauche à la figure 1, et le bord de dessous 22 est à droite à la figure 1. L'épaisseur de la tuile 10 à ses bords 20 et 22 est réduite par rapport à l'épaisseur de la tuile dans sa portion centrale entre les bords de chevauchement.

Le bord de dessus 20 comporte d'une part une nervure de blocage latéral 24 dont l'extrémité latérale est la face d'extrémité latérale gauche 14 et d'autre part, parallèlement à cette face 14 et vers l'intérieur de la tuile à partir de la nervure de blocage latéral 24, une rainure de blocage latéral 25 qui débouche à la face inférieure 12A du corps 12.

Le bord de dessous 22 comporte d'une part une nervure de blocage latéral 26 dont l'extrémité latérale est la face d'extrémité latérale droite 16 et dont la forme est complémentaire de celle de la rainure de blocage latéral 25. Le bord de dessous 22 comporte d'autre part, parallèlement à cette face 16 et vers l'intérieur de la tuile à partir de la nervure de blocage latéral 26, une rainure de blocage latéral 27 dont la forme est complémentaire de celle de la nervure de blocage latéral 24 et qui débouche à la face supérieure 12B du corps 12.

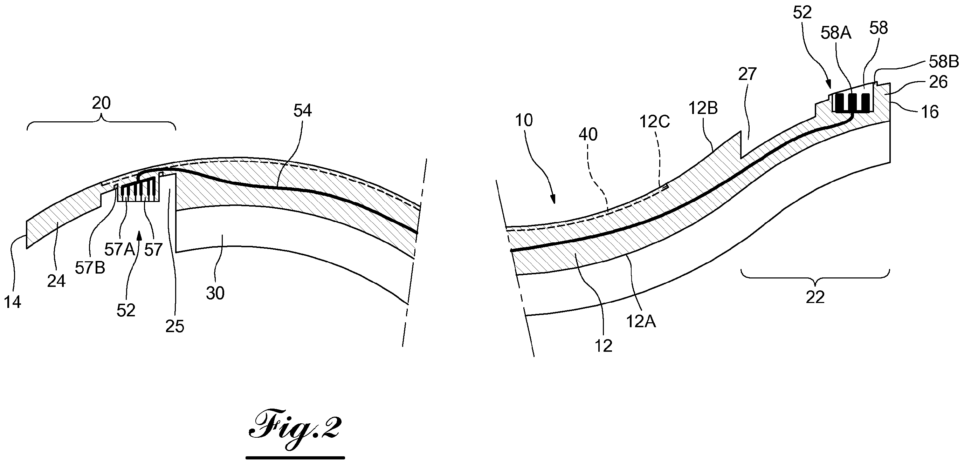

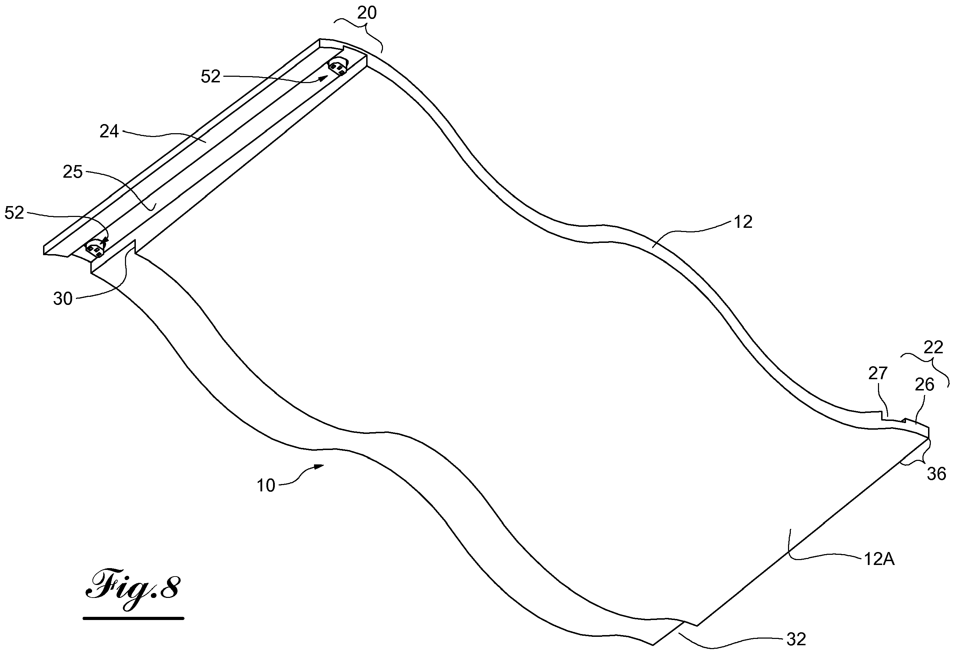

La tuile comporte, à la face inférieure 12A du corps 12, un épaulement d'arrêt 30 (figure 2) qui détermine un logement d'arrêt 32 (figure 8) à un bord inférieur du corps. L'épaisseur du corps 12 va rétrécissant régulièrement de l'épaulement 30 vers la face d'extrémité supérieure 34 de la tuile, la hauteur de cette face 34 correspondant sensiblement à la hauteur de l'épaulement 30. L'épaulement 30 permet d'une part le calage des tuiles de la rangée horizontale inférieure de la toiture sur un liteau de charpente, le liteau étant logé dans le logement d'arrêt 32. L'épaulement 30 permet d'autre part le calage des tuiles des autres rangées horizontales en ayant leur épaulement d'arrêt 30 en appui sur la face d'extrémité supérieure 34 de la tuile ou des tuiles de la rangée de rang inférieur. Un bord d'extrémité supérieure 36 des tuiles de rang inférieur est logé dans le logement d'arrêt 32 des tuiles de rang supérieur.

La tuile 10 comporte une couche photovoltaïque 40 directement au contact de l'environnement.

La couche photovoltaïque 40 recouvre la face supérieure 12B du corps 12 hormis sur une bande d'encadrement qui est au moins au droit du bord de dessous 22 et du bord d'extrémité supérieure 36, ces deux bords n'étant pas éclairés quand les tuiles sont montées sur une toiture. Pour maximiser la production d'énergie électrique en maximisant la surface de couche photovoltaïque, cette dernière est sur une partie libre de la face supérieure du corps la plus grande possible tant qu'elle peut être exposée à la lumière quand la tuile est intégrée à une toiture.

Dans le mode de réalisation représenté, la couche photovoltaïque 40 est un film collé à la tuile par l'intermédiaire d'une colle souple permettant d'absorber des dilatations différentielles entre le corps 12 et le film 40. Le film est du type disponible dans le commerce sous la marque UNI-SOLAR et fabriqué par la société United Solar Ovonic, filiale de la société Energy Conversion Devices dont le sigle est ECD. Le film peut aussi être du type disponible par l'intermédiaire de la société NANOSOLAR, Californie ou de la société Ascent Solar, Colorado. Ici, le film photovoltaïque peut résister aux conditions d'utilisation en extérieur, par exemple en intégrant une couche transparente de protection.

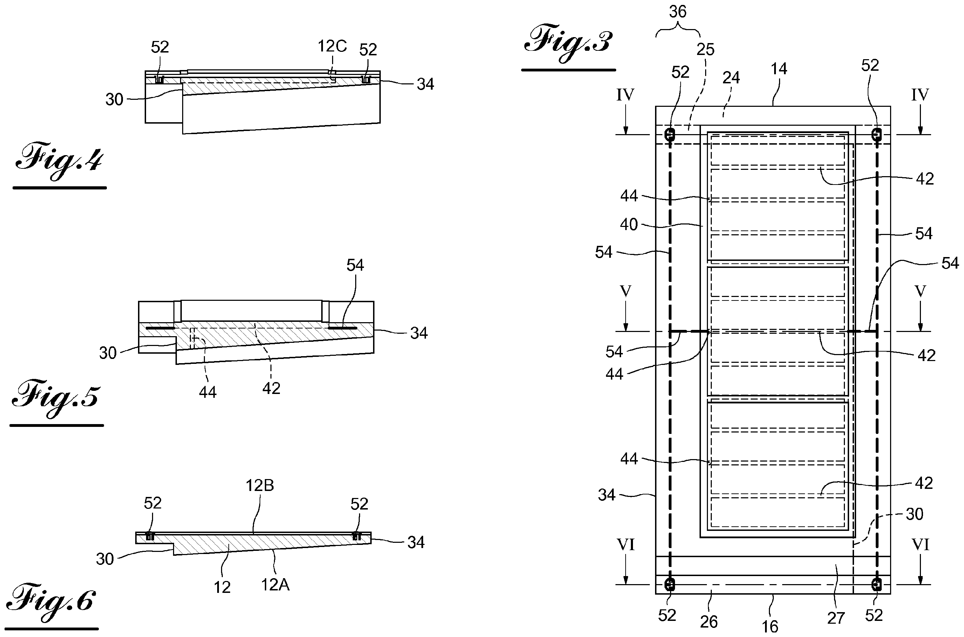

Comme représenté aux figures 3 à 6, le film formant la couche photovoltaïque 40 est logé dans une cavité 12C creusée à la face supérieure 12B du corps et dont le fond comporte des stries de passage d'air 42 et des conduits d'évacuation d'air 44 débouchant d'une part dans l'une des stries 42 et d'autre part à la face inférieure 12A de la tuile. Les stries de passage d'air 42 et les conduits d'évacuation d'air 44 permettent le refroidissement de la couche photovoltaïque 40 par circulation locale d'air entre le film et le corps de la tuile.

En variante non représentée, la cavité de refroidissement creusée dans le corps pour permettre localement un passage d'air entre le corps et le film photovoltaïque peut être constituée, en remplacement des stries, par des micro lamelles ou des micro perforations.

Outre des aspects esthétiques, le film logé dans sa cavité permet avantageusement que sa face supérieure ne dépasse pas la face supérieure 12B du corps 12 à la périphérie de la tuile, par exemple par affleurement desdites faces, ce qui permet d'éviter une détérioration du film quand des tuiles sont empilées pour leur stockage.

Le bord de dessus 20 et le bord de dessous 22 sont pourvus de connecteurs électriques 52 qui sont reliés à la couche photovoltaïque 40 par l'intermédiaire de conducteurs électriques horizontaux 54 et qui permettent de connecter électriquement entre elles les couches photovoltaïques 40 de tuiles 10 posées adjacentes sur un toit.

Les connecteurs électriques 52 sont aménagés dans des éléments d'assemblage par emboîtement pour que, par l'emboîtement d'une tuile 10 sur une autre tuile 10 en emboîtant les éléments d'assemblage du corps, les connecteurs électriques 52 des tuiles 10 viennent en contact électrique les uns avec les autres.

Dans le mode de réalisation représenté aux figures 1 à 10, les connecteurs électriques 52 font partie d'éléments d'assemblage constitués d'une part par un plot 57 formant une fiche en saillie dans la rainure de blocage latéral 25 et d'autre part par un logement 58 formant une prise aménagée en retrait dans la nervure de blocage latéral 26. Les plots 57 et les logements 58 s'étendent sensiblement perpendiculairement au plan P médian au corps 12 de la tuile 10, ou de façon légèrement inclinée par rapport au plan P, par exemple de 10 ou 20 degrés.

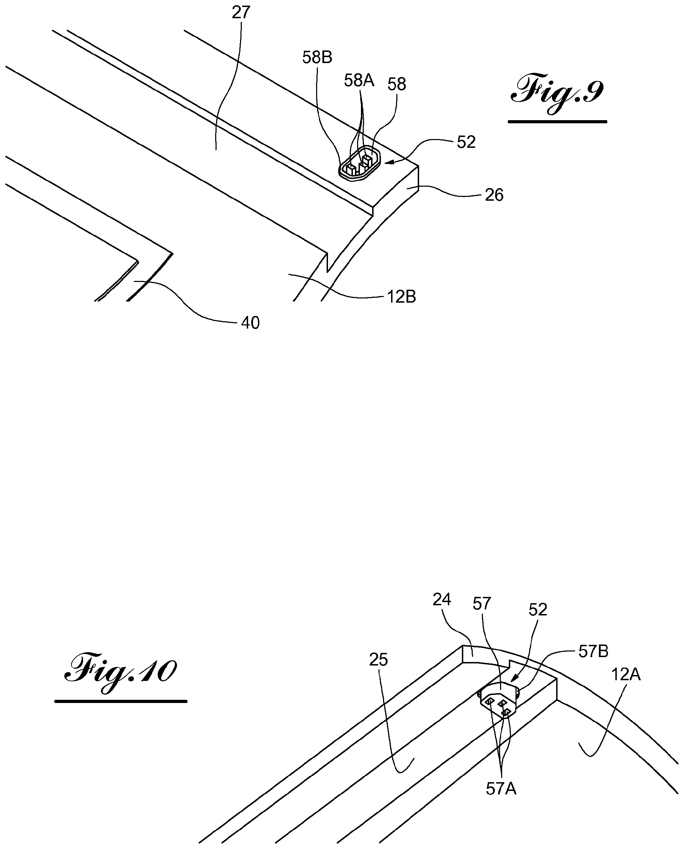

Dans le mode de réalisation tel que représenté aux figures 9 et 10, les plots 57 et les logements 58 des connecteurs électriques 52 sont venus de matière avec le corps 12 en ayant une section hexagonale ayant deux côté opposés de longueurs différentes, supérieure à la longueur des autres côtés. Les plots 57 formant des fiches et les logements 58 formant des prises sont de type ressemblant aux prises et fiches généralement utilisées pour l'alimentation d'unité centrale et écrans d'ordinateur. Trois broches 58A formant élément de connexion mâle par exemple en cuivre sont dans chaque logement 58, s'étendant parallèlement à l'axe de ces derniers, perpendiculairement au plan P médian au corps 12 de la tuile 10. Trois puits 57A constitués par des éléments de connexion femelle conformés en deux demi coques, par exemple en cuivre, sont aménagés dans les plots 57. Le nombre de broches n'est pas limité à trois et peut par exemple être inférieur à trois, une broche unique étant envisageable.

L'embouchure de chaque logement 58 et la racine de chaque plot 57 comporte respectivement une rigole d'étanchéité 57B et un bourrelet d'étanchéité 58B.

La hauteur des broches 58A et des puits 57A est adaptée au profil ondulé de la tuile et à l'épaisseur disponible dans le corps, l'extrémité libre des plots 57 et le fond des logements 58 étant parallèle au plan P de la tuile.

Les conducteurs 54 sont raccordés électriquement aux broches 58A et aux puits 57A, comme dans des prises et fiches d'alimentation d'ordinateur.

Le corps est en matériau polymère obtenu par moulage, par exemple par injection ou par compression, en intégrant une charge par exemple céramique. Le polymère est par exemple du polypropylène (PP) ou du polyéthylène haute densité (PEHD) ou du poly méthyle méthacrylate (PMMA) ou du poly tétra fluoro éthylène (PTFE) ou toute autre matière équivalente convenant pour résister aux conditions atmosphériques en extérieur de bâtiment et suffisamment résistant pour ne pas se briser en cas de grêle par exemple.

Comme autres matières, le corps peut être en polymère tel que ci-dessus, avec une charge de bois, ou en pâte de bois injectée ou formée.

Dans le mode de réalisation représenté aux figures 1 à 8, les conducteurs électriques 54 et leur raccordement aux broches et puits sont noyés dans le corps 12 en matériau moulé, qui sert avantageusement d'isolant électrique.

Les dimensions de la tuile représentée à la figure 1 sont environ 1 mètre de longueur et 0,5 mètre de largeur, pour une épaisseur variant d'environ 25 millimètres au plus fin de la tuile et 50 millimètres à l'épaulement 30, mais l'invention peut s'appliquer à des tuiles plus petites, par exemple de moitié sur la longueur et la largeur, ou plus grandes le cas échéant.

Dans un mode de réalisation, la face supérieure 12B du corps 12 est recouverte d'une couche minérale de protection dont l'épaisseur est inférieure à un millimètre, par exemple une couche ultra fine de quelques microns, et visant à protéger de l'usure du temps le polymère chargé pour que ce dernier ne vieillisse pas prématurément à cause par exemple des rayons ultra violets du soleil. La couche minérale de protection peut être appliquée en cours de production du corps ou après la production du corps, en finition. La cuisson de cette couche optionnelle de minéraux sur la tuile se fait à une température compatible avec les systèmes électriques intégrés.

Avantageusement, la tuile 10 est dépourvue d'enveloppe externe transparente d'emballage de la couche photovoltaïque 40 et du corps 12 car la couche photovoltaïque 40 est de nature à être naturellement résistante à l'environnement. Tant les connecteurs électriques 42 que les conducteurs électriques 44 sont protégés par le corps 12 de leur tuile ou des tuiles adjacentes.

Le fonctionnement et l'utilisation de la tuile 10 ressortent déjà en partie de la description qui précède et va maintenant être détaillé.

Lors de la pose des tuiles, typiquement sur une charpente pourvue de chevrons verticaux sur lesquels sont fixés des liteaux horizontaux, une première rangée inférieure de tuiles est disposée avec l'épaulement d'arrêt 30 des tuiles contre une face verticale du liteau inférieur qui est logé dans le logement d'arrêt 32. Ces tuiles sont clouées et vissées sur le deuxième liteau de la charpente par exemple en faisant passer ledit clou ou ladite vis dans un perçage pratiqué dans le bord d'extrémité supérieure 36 des tuiles.

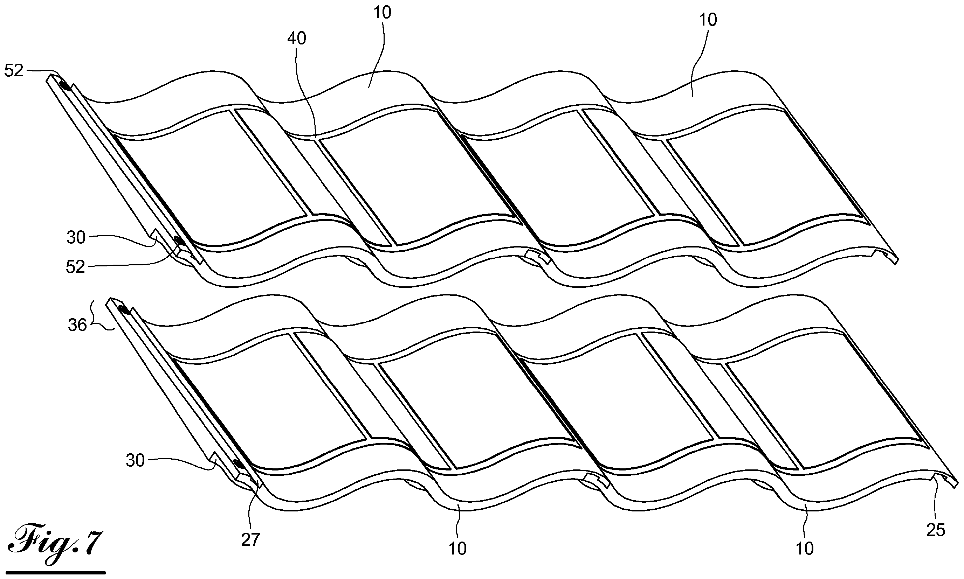

Ensuite, les rangées supérieures sont disposées une à une sur la charpente en plaçant, après par exemple descente verticale des tuiles, le plan médian P de chaque tuile 10 sensiblement parallèlement au plan des liteaux, puis en posant chaque tuile dans un mouvement de descente dans une direction perpendiculaire auxdits plans. Lors de ce dernier mouvement de descente, l'épaulement 30 de la tuile de rang supérieur est mis en appui sur la face supérieure 34 du bord d'extrémité supérieure 36 de la tuile ou des tuiles de rang inférieur (figure 7). Lors de ce mouvement de descente, les bords de dessus 20 sont mis sur les bords dessous 22, avec emboîtement des nervures de blocage latérales 24 ou 26 dans les rainures de blocage latéral 27 ou 25 correspondantes et emboîtement des éléments d'assemblage pour centrer les tuiles les unes par rapport aux autres afin que les connecteurs électriques 52 viennent correctement en contact électrique les uns avec les autres. En effet, le centrage permet un bon positionnement mutuel des tuiles pour une connexion des connecteurs électriques 52 sans détérioration de ces derniers.

Dans le cas où les plots 57 et les logements 58 s'étendent inclinés par rapport au plan P de la tuile 10, l'inclinaison est choisie de manière que le dernier mouvement de descente soit selon une direction plus proche de la verticale que de la perpendiculaire au plan P, l'angle d'inclinaison étant de l'ordre de grandeur de la pente de la toiture, par exemple légèrement inférieure à cette dernière.

Avantageusement, les éléments d'assemblage et leur connecteur permettent une connexion électrique simultanée à l'assemblage mécanique des tuiles, au bénéfice de la réduction du temps de montage de la toiture et de l'absence de manipulation délicate des tuiles. Les éléments d'assemblage permettent aussi de maintenir mécaniquement lesdites tuiles les unes par rapport aux autres dès leur pose.

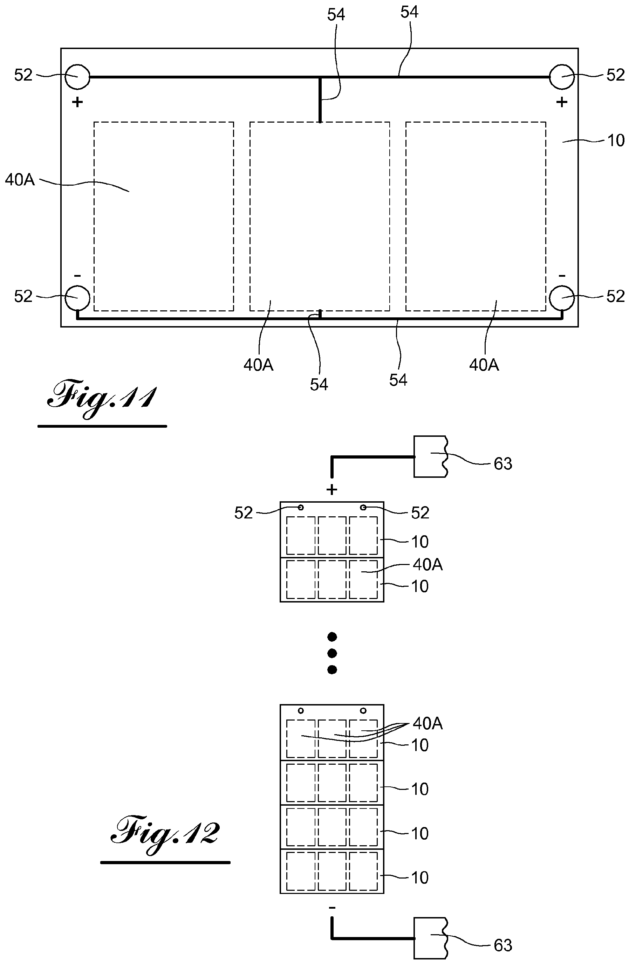

Pour terminer la pose de chaque tuile, il suffit de clouer ou de visser la tuile sur son liteau, sans nécessité d'opération spécifique de câblage des tuiles photovoltaïques adjacentes. Le câblage des tuiles au réseau électrique du bâtiment s'effectue à la pose des tuiles par simple connexion sur un connecteur correspondant installé sur la charpente, ce connecteur étant de même type que celui des tuiles et étant intégré à un circuit électrique du type de celui représenté à la figure 12.

Le mode de câblage représenté à la figure 12 correspond à un raccordement électrique des tuiles adjacentes en lignes verticales, appelé par commodité connexion série des tuiles. Pour ce mode de câblage, comme représenté à la figure 11, les connecteurs électriques 52 situés en haut de leur tuile 10 sont par exemple reliés au pôle positif de la couche photovoltaïque 40, qui peut comporter trois modules 40A. Les connecteurs électriques 52 situés en bas de leur tuile 10 sont reliés au pôle négatif de la couche photovoltaïque 40. Un convertisseur continu alternatif 63 est raccordé à chaque ligne de tuile qui s'étend typiquement du haut en bas d'une toiture, le pôle négatif de la ligne étant par exemple en bas et le pôle positif en haut. Par exemple, chaque convertisseur 63, de type standard, est utilisé pour 16 tuiles à 18 tuiles de 100 Volts et 4 Ampères.

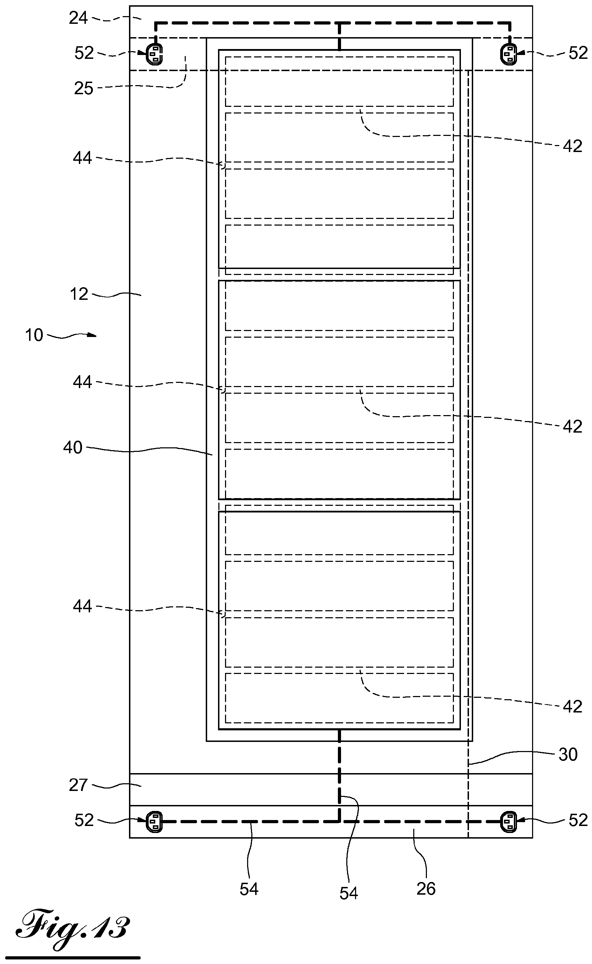

En variante de la tuile représentée à la figure 13, les conducteurs électriques sont verticaux, sans autre changement pour le reste de la tuile.

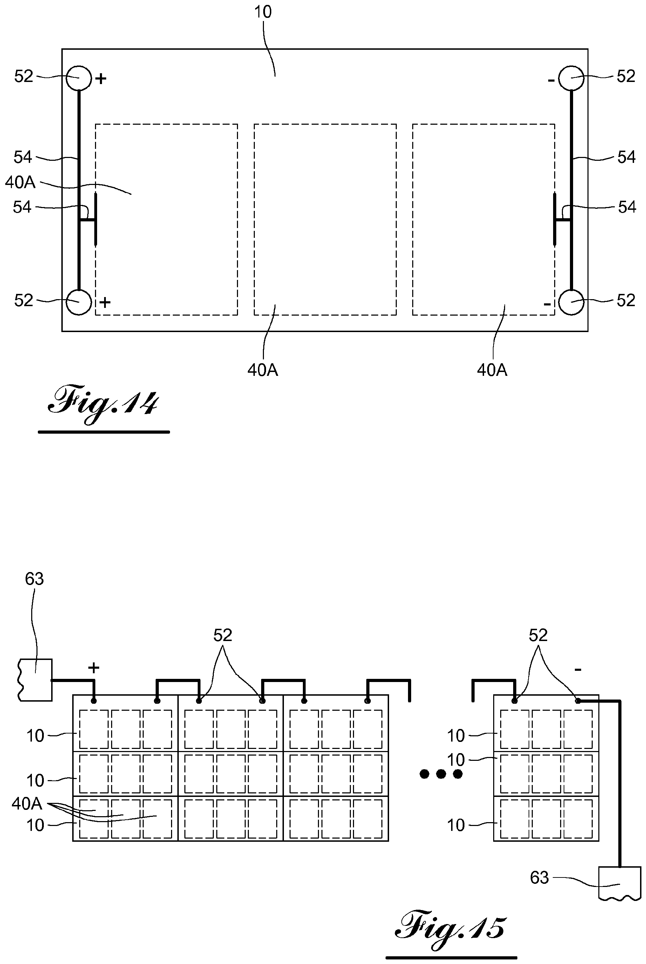

Les tuiles telles que celles représentées à la figure 13 sont reliées entre elles par câblage tel que représenté à la figure 15, qui correspond à un raccordement électrique des tuiles adjacentes en lignes horizontales, appelé par commodité connexion parallèle des tuiles. Dans ce cas, les connecteurs électriques 52 situés à la gauche de leur tuile 10 sont reliés par exemple au pôle positif de la couche photovoltaïque 40, qui peut comporter trois modules 40A, comme représenté sur les figures. Les connecteurs électriques 52 situés à la droite de leur tuile 10 sont reliés au pôle négatif (figure 14) de la couche photovoltaïque 40. Un convertisseur continu alternatif est aussi raccordé à chaque ligne d'un groupe de trois tuiles, le pôle négatif de la ligne étant par exemple à gauche de la ligne et le pôle positif à droite.

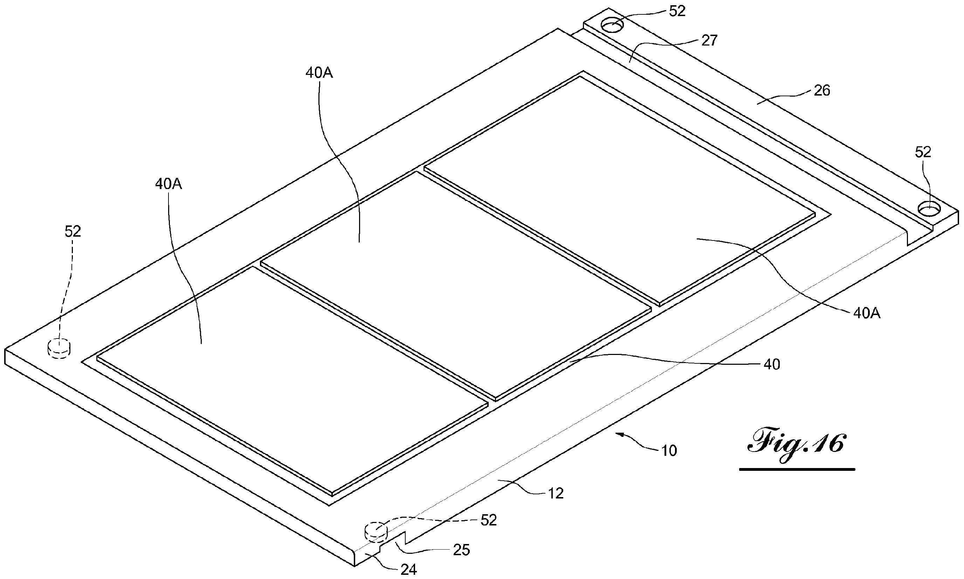

En variante de la tuile représentée à la figure 16, le corps est plat au lieu d'être ondulé, sans autre changement pour le reste de la tuile par rapport à celle décrite en relation avec les figures 1 à 12. Les connecteurs 52 sont les mêmes que ceux représentés par exemple à la figure 9 et à la figure 10, mais ils sont ici représentés de façon schématique.

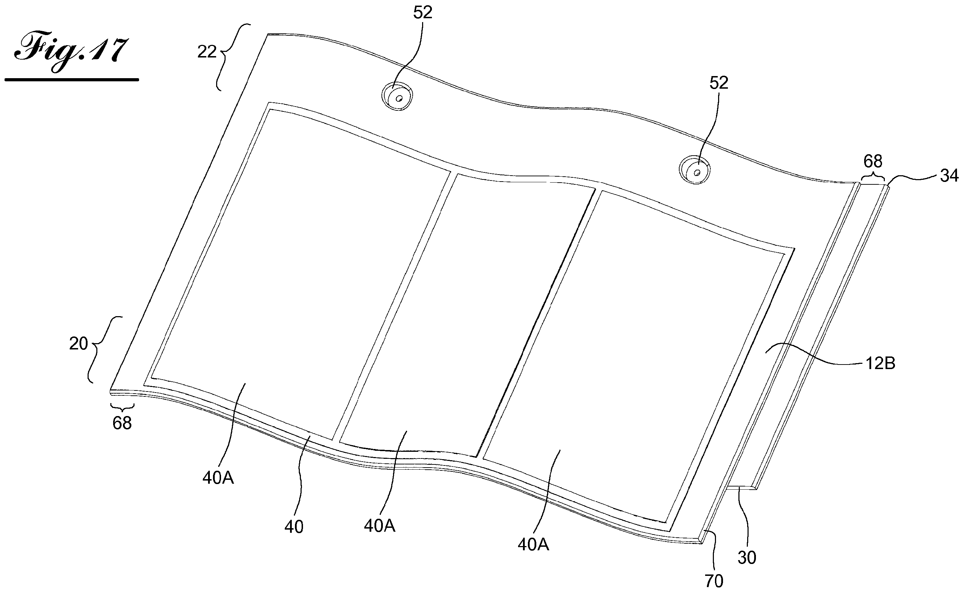

En variante de la tuile représentée à la figure 17 sur la base de la tuile décrite en relation avec les figures 1 à 12, le corps de la tuile est fin et d'épaisseur sensiblement constante, dans le sens où il ne comporte pas les rainures et nervures de blocages latéral. Ces dernières sont remplacées par un système de bords de chevauchement latéral 68 plats, avec épaulement de calage latéral 70 du type de celui décrit pour le calage vertical des tuiles du mode de réalisation décrit en relation avec les figures 1 à 12.

Ici, le bord de dessus 20 et le bord de dessous 22 comportant les connecteurs électriques 52 sont respectivement les bords inférieur et supérieur de la tuile. Des plots et logements correspondants, qui sont représentés de façon schématique à la figure 17, servent à créer une liaison mécanique entre les tuiles de manière à les centrer et de manière à éviter qu'elles ne glissent les unes par rapport aux autres, tout en intégrant les connecteurs auxquels sont raccordés les conducteurs. Les connecteurs sont par exemple tels que représentés aux figures 2, 9 et 10 ou par exemple des plaques planes recouvrant l'extrémité libre des plots et le fond des logements.

Avantageusement, les tuiles telles que décrites ci-dessus permettent tant un montage aligné des tuiles qu'un montage en quinconce.

Dans un mode de réalisation non représenté, la tuile 10 comporte une couche thermiquement isolante sur la face inférieure 12A du corps 12. La couche thermiquement isolante est par exemple fibrée ou moussée ou en matériau hybride moussé et fibré, respectivement de type par exemple laine de roche ou polyuréthane. La couche thermiquement isolante est recouverte d'une couche de finition inférieure, par exemple une plaque ou un film en polymère permettant de protéger la couche thermiquement isolante des chocs lors des manipulations de la tuile et le cas échéant de l'humidité.

Dans un mode de réalisation non représenté, la couche photovoltaïque est une couche de nanoparticules photovoltaïques du type de celles utilisées dans des encres et des films connus sous le nom « Nanosolar » indiqué ci-dessus.

Le procédé de fabrication d'une tuile 10 selon l'invention va maintenant être détaillé.

Tout d'abord, la couche photovoltaïque 40 sous forme de film, raccordée aux conducteurs électriques 54, est plaquée au fond d'une empreinte d'un moule et les conducteurs 54 sont positionnés dans le moule et maintenus par l'intermédiaire de guides tels que des plots ou des inserts solidaires de l'empreinte et par exemple solidaires des connecteurs électriques 52 présents à l'extrémité libre des conducteurs 54.

Après fermeture du moule qui maintient lesdits conducteurs 54 et connecteurs 52, le matériau polymère et sa charge sont injectés dans le moule pour constituer le corps 12 et noyer les conducteurs 54 dans ce dernier. La tuile est alors démoulée et est prête à l'emploi, sans cuisson ultérieure à une température supérieure à celle de fusion des connecteurs et conducteurs intégrés. En effet, le moulage doit permettre que le matériau du corps 12 soit injecté à une température à laquelle les conducteurs et les connecteurs ne sont pas détériorés.

Dans une variante de procédé, la matière n'est pas moulée par injection, mais moulée par formage par compression à froid ou à chaud, sans changer les étapes ci-dessus décrites.

Avantageusement, la polymérisation d'un tel matériau polymère se fait directement au moulage et/ou au formage, lors du refroidissement de la matière à démouler, sans cuisson comme c'est le cas pour une tuile classique en terre cuite. Son matériau est adapté à une polymérisation au refroidissement après moulage ou formage à froid.

Dans une variante de procédé, la couche photovoltaïque 40 sous forme de film n'est pas présente dans le moule lors du moulage, mais elle est raccordée aux connecteurs 40 après démoulage, lors de son collage au corps pourvu de ses conducteurs. Des organes de connexion par exemple de type cosse sont prévus à l'interface des conducteurs et de la couche photovoltaïque 40.

En variante de procédé, si la tuile est pourvue d'une couche minérale de protection, cette dernière est appliquée par exemple autour de la couche photovoltaïque. En variante, la couche minérale de protection est appliquée sur le corps avant collage de la couche photovoltaïque sur le corps de la tuile, en chevauchement le cas échéant de la couche minérale de protection.

En variantes de procédé, lorsque la tuile 10 comporte une couche thermiquement isolante, cette dernière est injectée en surmoulage sur le corps ou collée sur le corps, la couche de finition inférieure étant ensuite le cas échéant rapportée également par surmoulage ou collage.

Dans une variante de procédé, des buses sont crées dans le corps lors du moulage, par exemple en prévoyant des tiroirs dans le moule, et les conducteurs sont insérés dans les buses après démoulage du corps et avant connexion à la couche photovoltaïque. Ces canaux peuvent ensuite être fermés ou rester ouverts.

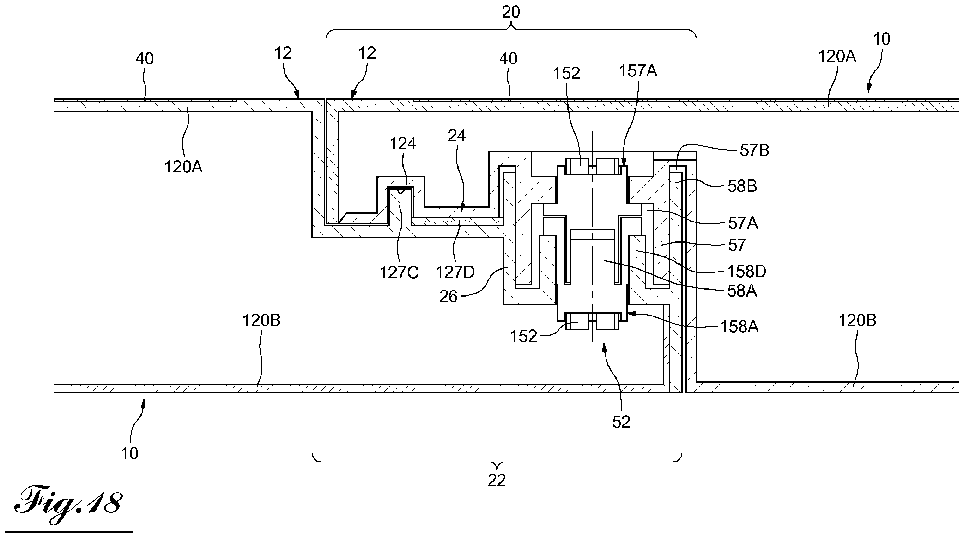

Les figures 18 à 21 montrent une variante de réalisation de la tuile 10 dont le corps 12 comporte une demi coquille supérieure 120A et une demi coquille inférieure 120B déterminant un espace intérieur. Les demi-coquilles sont emboîtées par leurs parois latérales, la demi-coquille supérieure 120A ayant ses parois latérales qui recouvrent les parois latérales de la demi-coquille inférieure 120B.

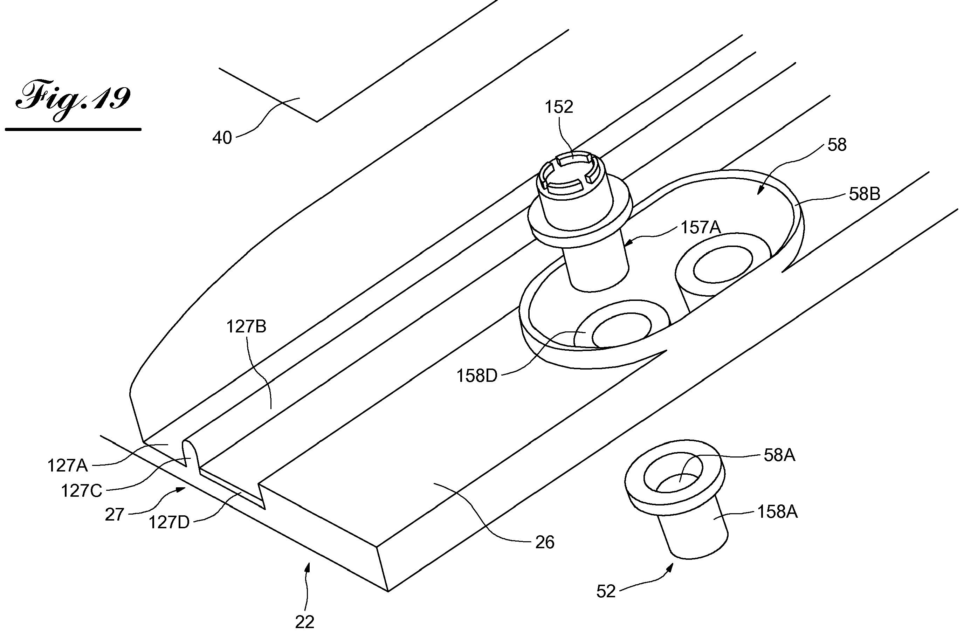

Dans ce mode de réalisation, à la figure 19 et à la figure 18 en prenant en considération la tuile 10 représentée à gauche, il est apparent que le bord de dessous 22 présente une rainure de blocage latéral 27 en deux saignées parallèles 127A et 127B séparées par une nervure rectiligne 127C. La saignée 127B, plus proche de la nervure de blocage latéral 24, reçoit un joint plat d'étanchéité 127D.

Dans ce mode de réalisation, chaque plot 57 et chaque logement 58 déterminent un volume délimité par les parois à contour oblong et renferment deux connecteurs 52 de type coaxial pourvus d'éléments cylindriques.

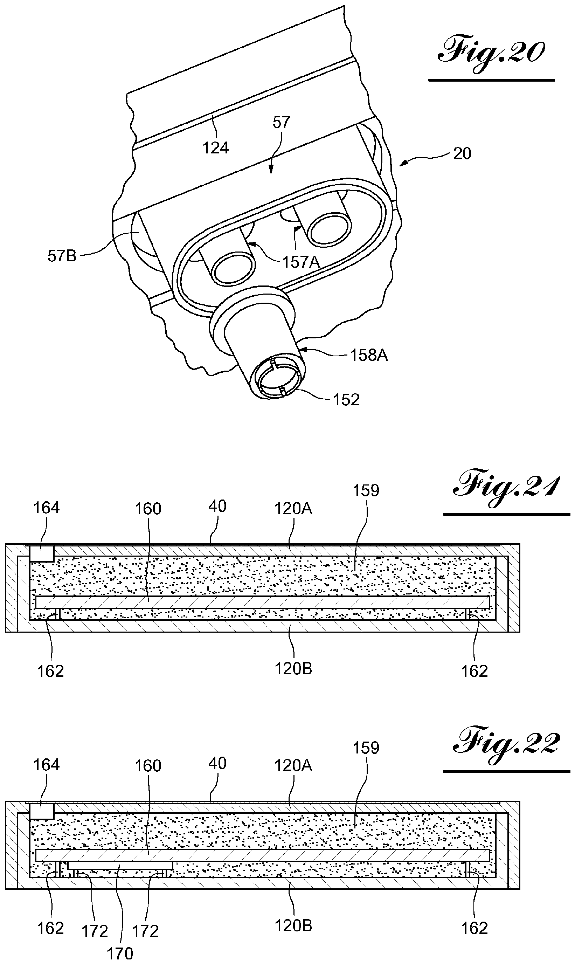

Le bourrelet d'étanchéité 58B, à l'embouchure du logement 58, est à contour oblong en saillie de la nervure de blocage latéral 26 du bord de dessous 22. A l'intérieur du logement 58, la demi-coquille supérieure 120A détermine deux fûts 158D recevant chacun une douille 158A à l'intérieur de laquelle s'étend une broche 58A de connecteur 52. L'une des douilles 158A est représentée démontée de sa tuile à la figure 19 et, à la figure 20, prête à être connectée.

Chaque plot 57 comporte ici un puits 57A qui renferme une douille de connexion 157A dans laquelle vient se loger la broche 58A correspondante. Chaque plot 57, à la connexion mécanique et électrique des tuiles adjacentes, a sa paroi délimitant son puits 57A qui coopère à engagement avec la paroi délimitant le logement 58 qui correspond. Ainsi, le bourrelet 58B de cette paroi s'engage dans la rigole d'étanchéité 57B qui lui correspond. L'une des douilles 157A est représentée prête à être connectée à la figure 20. Les douilles 157A sont représentées assemblées à leur tuile, montée dans son plot 57, à la figure 19.

Chaque connecteur 52 comporte des pattes 152 en quart de cercle qui sont connectées aux conducteurs s'étendant entre les demi-coquilles 120A et 120B représentées.

Le bord de dessus 20 comporte, outre ses plots 57, une rainure rectiligne 124 aménagée dans sa nervure de blocage latéral 24 pour être en regard de la nervure rectiligne 127C située entre les saignées parallèles 127A et 127B correspondantes. Une partie de cette nervure de blocage latéral 24 vient en appui du joint plat 127D.

Dans ce mode de réalisation, l'espace intérieur entre les demi-coquilles 120A et 120B est par exemple rempli par de la mousse polyuréthane 159, après montage des connecteurs. Ainsi, la mousse de remplissage de l'espace intérieur évite la condensation dans le corps de la tuile et participe à ses propriétés d'isolation thermique.

Pour la fabrication de la tuile, le procédé comprend le moulage par injection ou par compression des demi-coquilles 120A et 120B, ces coquilles étant par exemple à base de polymère chargé céramique ou bois comme dans les modes de réalisation précédents. Ensuite, les connecteurs sont assemblés à leur demi-coquille, par exemple par sertissage ou vissage. Les conducteurs sont alors connectés aux connecteurs et à la couche photovoltaïque. Les demi-coquilles 120A et 120B, équipées électriquement et non jointives, sont alors placées dans un moule pour l'injection de la mousse polyuréthane puis fermeture de la tuile par rapprochement desdites demi-coquilles. Le joint plat 127D est ensuite collé dans sa rainure.

Dans la variante de réalisation représentée schématiquement à la figure 21, une couche thermiquement isolante interne 160 est disposée entre les demi-coquilles 120A et 120B. Cette couche 160 est par exemple maintenue parallèlement au fond de la demi-coquille inférieure 120B par l'intermédiaire de pions 162 venus de moulage avec ladite demi-coquille, de manière à laisser un espace inter demi-coquille et couche thermiquement isolante interne pour le remplissage de la tuile par la mousse polyuréthane 159.

La couche thermiquement isolante, permettant le passage des conducteurs et/ou leur maintien, est par exemple un isolant encapsulé sous vide, typiquement des fibres, ou un nid d'abeille. Sa matière est choisie pour avoir un pouvoir isolant thermique plusieurs fois supérieur à celui de la mousse polyuréthane.

Une boîte de jonction 164 est présente dans la demi-coquille supérieure 120A, en étant encastrée dans une ouverture de cette dernière. La boîte de jonction permet de récupérer l'énergie de la couche photovoltaïque 40 pour raccorder cette dernière aux connecteurs 52 via les conducteurs 54.

Pour cette variante, avant l'injection de la mousse polyuréthane de remplissage, la couche thermiquement isolante 160 est mise en place dans la demi-coquille inférieure 120B et la boîte de jonction 164 est mise en place dans la demi-coquille supérieure 120A.

Dans une variante non représentée de la réalisation montrée schématiquement à la figure 21, une pluralité de couches thermiquement isolantes internes sont disposées les unes parallèlement aux autres et solidaires les unes des autres.

Dans une variante non représentée, une couche thermiquement isolante interne au corps de la tuile est prévue dans une tuile pleine comme celle représentée par exemple à la figure 2. Dans ce cas, le cas de tuile est moulé autour de la couche thermiquement isolante qui peut servir de support pour les conducteurs électriques et/ou les connecteurs.

Dans une variante de réalisation représentée schématiquement à la figure 22, un boîtier électronique 170 est monté entre couche thermiquement isolante interne 160 et le fond de la demi-coquille inférieure 120B. Ce boîtier électronique 170 est un convertisseur de courant continu en courant alternatif rendant la tuile 10 autonome électriquement pour sa connexion aux autres tuiles et/ou au circuit électrique du bâtiment.

Ce boîtier électronique 170 est de forme parallélépipédique rectangle relativement plat. Il est maintenu parallèlement au fond de la demi-coquille inférieure 120B par l'intermédiaire de pions 172 venus de moulage avec ladite demi-coquille, de manière à laisser un espace inter demi-coquille et couche thermiquement isolante interne pour le remplissage de la tuile par la mousse polyuréthane 159.

Pour sa fonction électrique, le boîtier 170 comporte en entrée deux connecteurs pour la liaison par conducteur à la couche photovoltaïque 40 via la boîte de jonction 164 et en sortie deux connecteurs pour la liaison via les conducteurs aux connecteurs aménagés dans les éléments d'assemblage de la tuile. L'expression convertisseur de courant continu en courant alternatif s'entend aussi d'un onduleur qui permet de contrôler et de lisser l'énergie électrique en sortie de la tuile.

## Revendications

1. Tuile photovoltaïque pour toiture comportant une pluralité desdites tuiles dont au moins deux tuiles adjacentes se chevauchent au moins partiellement, comprenant :
- un corps (12) ayant des bords de chevauchement constituant un bord de dessus (20) et un bord de dessous (22), le bord de dessus (20) étant conformé pour recouvrir le bord de dessous (22) d'au moins l'une des tuiles adjacentes,
- une couche photovoltaïque (40) placée sur une partie libre de la face supérieure du corps hors du bord de dessous et
- des connecteurs électriques (52) qui sont reliés à la couche photovoltaïque (40) par l'intermédiaire de conducteurs électriques (54) pour connecter électriquement entre elles les couches photovoltaïques d'au moins deux des tuiles adjacentes (10) de la toiture,
**caractérisée en ce que** les connecteurs électriques (52) sont renfermés en retrait dans des éléments d'assemblage (57, 58) par emboîtement aménagés sur les bords de chevauchement (20, 22) pour permettre auxdits bords de chevauchement un positionnement mutuel lors de la pose de deux des tuiles adjacentes (10) de manière que simultanément, par l'emboîtement des éléments d'assemblage (57, 58), les connecteurs électriques (52) renfermés dans ces éléments viennent en contact électrique les uns avec les autres, et **en ce que** les éléments d'assemblage par emboîtement comprennent d'une part au moins un plot (57) qui est en saillie de l'un du bord de dessus (20) ou du bord de dessous (22) et d'autre part au moins un logement (58) en retrait dans l'autre du bord de dessous (22) ou du bord de dessus (20), les connecteurs électriques (52) étant en retrait dans leur plot et de leur logement.

2. Tuile selon la revendication 1, **caractérisée en ce que** les conducteurs (54) sont internes au corps de la tuile dans leur parcours entre la couche photovoltaïque (40) et leur connecteur électrique (52).

3. Tuile selon l'une quelconque des revendications précédentes, **caractérisée en ce que** les connecteurs électriques comportent des éléments de connexion mâle et femelle dans les éléments d'assemblage par emboîtement.

4. Tuile selon l'une quelconque des revendications précédentes,, **caractérisée en ce que** le plot (57) forme une fiche en saillie de son bord de chevauchement (20) et le logement (58) forme une prise aménagée en retrait de son bord de chevauchement (22).

5. Tuile selon la revendication 4, **caractérisée en ce que** le plot (57) et le logement (58) sont sensiblement perpendiculaires au plan médian (P) de la tuile (10), ce plan étant prévu pour être parallèle au plan d'un pan de toiture recevant la tuile.

6. Tuile selon l'une quelconque des revendications précédentes, **caractérisée en ce que** la couche photovoltaïque (40) est directement au contact de l'environnement.

7. Tuile selon l'une quelconque des revendications précédentes, **caractérisée en ce que** la couche photovoltaïque (40) est un film collé au corps (12) de la tuile (10) par l'intermédiaire d'une colle souple permettant d'absorber des dilatations différentielles entre le corps (12) et le film.

8. Tuile selon la revendication 7, **caractérisée en ce que** le film constituant la couche photovoltaïque (40) est logé dans une cavité (12C) en retrait de la face supérieure du corps (12) à sa partie libre, la profondeur de la cavité étant telle que la face supérieure du film soit en affleurement d'une partie périphérique de la partie libre de la face supérieure du corps.

9. Tuile selon l'une quelconque des revendications 7 à 8, **caractérisée en ce que** la face supérieure du corps (12), dans sa zone recouverte par le film photovoltaïque (40), est au moins partiellement creusée de canaux de refroidissement (42) permettant localement un passage d'air entre le corps et le film photovoltaïque.

10. Tuile selon la revendication 9, **caractérisée en ce que** les canaux de refroidissement (42) sont des stries et le corps (12) détermine des conduits d'évacuation d'air (44) débouchant d'une part dans l'une des stries (42) et d'autre part à la face inférieure (12A) de la tuile (10).

11. Tuile selon l'une quelconque des revendications 1 à 6, **caractérisée en ce que** la couche photovoltaïque (40) est une couche de nanoparticules photovoltaïques.

12. Tuile selon l'une quelconque des revendications précédentes, **caractérisée en ce que** le corps (12) de la tuile (10) est en matériau à base de polymère.

13. Tuile selon la revendication 12, **caractérisée en ce que** le corps (12) de la tuile (10) en matériau polymère est chargé céramique.

14. Tuile selon l'une quelconque des revendications 12 à 13, **caractérisée en ce que** le corps (12) de la tuile (10) est en matériau à base de bois.

15. Tuile selon l'une quelconque des revendications précédentes, **caractérisée en ce que** son corps (12) est à base de matériau adapté à polymériser au refroidissement après moulage ou lors d'un formage sous pression.

16. Tuile selon l'une quelconque des revendications 12 à 14, **caractérisée en ce que** la face supérieure (12B) du corps (12) de la tuile (10) est recouverte d'une couche minérale de protection notamment aux rayons ultra violets.

17. Tuile selon l'une quelconque des revendications précédentes, **caractérisée en ce que** la tuile (10) comporte une couche thermiquement isolante sur la face inférieure (12A) du corps (12).

18. Tuile selon la revendication 16, **caractérisée en ce que** la couche thermiquement isolante est recouverte d'une couche de finition inférieure.

19. Tuile selon l'une quelconque des revendications précédentes, **caractérisée en ce que** son corps (12) comporte une demi-coquille supérieure (120A) et une demi-coquille inférieure (120B) déterminant un espace intérieur.

20. Tuile selon la revendication 19, **caractérisée en ce que** l'espace intérieur entre la demi-coquille supérieure (120A) et la demi-coquille inférieure (120B) est rempli d'une mousse.

21. Tuile selon l'une quelconque des revendications précédentes, **caractérisée en ce que** son corps (12) renferme au moins une couche thermiquement isolante interne (160).

22. Tuile selon l'une quelconque des revendications précédentes, **caractérisée en ce que** son corps (12) renferme un boîtier électronique (170) de convertisseur de courant continu en courant alternatif.

23. Procédé de fabrication d'une tuile photovoltaïque conforme à l'une quelconque des revendications 2 à 22, le procédé comportant une étape de positionnement dans un moule des conducteurs (54) dont au moins une extrémité est pourvue d'un connecteur électrique (52) et une étape de moulage du corps (12) de la tuile (10) dans le moule renfermant les conducteurs.

24. Procédé selon la revendication 23, **caractérisé en ce qu'**il comporte une étape de positionnement d'une couche photovoltaïque (40) dans le moule avant l'étape de moulage du corps (12).

25. Procédé selon la revendication 23, **caractérisé en ce qu'**il comporte une étape de positionnement d'une couche photovoltaïque (40) sur la face supérieure (12B) du corps (12) après l'étape de moulage et après une étape de démoulage du corps.

26. Procédé de recouvrement d'une charpente par des tuiles photovoltaïques conformes à l'une quelconque des revendications 1 à 22, le procédé comportant, après la pose sur un pan de charpente d'au moins une première desdites tuiles (10), l'approche d'une deuxième tuile (10) afin de positionner son bord de dessus (20) en regard du bord de dessous (22) de la première tuile (10), la pose de la deuxième tuile (10) adjacente à la première tuile (10) en l'approchant sensiblement perpendiculairement au plan dudit pan de charpente avec d'une part superposition du bord de dessus (20) de la deuxième tuile sur le bord de dessous (22) de la première tuile et d'autre part emboîtement sensiblement perpendiculairement audit pan de charpente des éléments d'assemblage par emboîtement (57, 58) pour maintenir mécaniquement lesdites tuiles et les connecter électriquement.

27. Ensemble de recouvrement pour toiture, comportant une pluralité de tuiles photovoltaïques conformes l'une quelconque des revendications 1 à 22, le bord de dessus (20) de l'une des tuiles (10) recouvrant le bord de dessous (22) d'au moins l'une des tuiles adjacentes (10) en ayant leurs connecteurs électriques (52) connectés électriquement.

## Patentansprüche

1. Photovoltaik-Dachziegel, umfassend eine Vielzahl der Ziegel, von denen mindestens zwei benachbarte Ziegel mindestens teilweise überlappen, umfassend:
- einen Körper (12) mit überlappenden Kanten, der eine obere Kante (20) und eine untere Kante (22) bildet, wobei die obere Kante (20) geformt ist, um die untere Kante (22) mindestens eines der benachbarten Ziegel abzudecken,
- eine photovoltaische Schicht (40), die auf einem freien Teil der oberen Seite des Körpers außerhalb der unteren Kante angeordnet ist und
- elektrische Anschlüsse (52), die mit der photovoltaischen Schicht (40) mit Hilfe von elektrischen Leitern (54) verbunden sind, um elektrischen zwischen ihnen die photovoltaischen Schichten von mindestens zwei der benachbarten Ziegel (10) des Dachs zu verbinden,
**dadurch gekennzeichnet, dass** die elektrischen Anschlüsse (52) zurückgesetzt in Montageelementen (57, 58) durch Zusammenfügung eingeschlossen sind, die auf den Überlappungskanten (20, 22) angeordnet sind, um den Überlappungskanten eine gegenseitige Positionierung bei der Anbringung von zwei der benachbarten Ziegel (10) zu ermöglichen, so dass gleichzeitig, durch Zusammenfügung der Montageelemente (57, 58), die elektrischen Anschlüsse (52), die in diesen Elementen eingeschlossen sind, miteinander in elektrischen Kontakt kommen, und dadurch, dass die Montageelemente durch Zusammenfügen einerseits mindestens ein Kontaktstück (57) umfassen, das von einer der oberen Kante (20) oder der unteren Kante (22) hervorsteht, und andererseits mindestens eine Aufnahme (58), die in der anderen der unteren Kante (22) oder der oberen Kante (20) zurückgesetzt ist, wobei die elektrischen Anschlüsse (52) in ihrem Kontaktstück und ihrer Aufnahme zurückgesetzt sind.

2. Ziegel nach Anspruch 1, **dadurch gekennzeichnet, dass** sich die Leiter (54) im Körper des Ziegels in seinem Umfang zwischen der photovoltaischen Schicht (40) und ihrem elektrischen Anschluss (52) befinden.

3. Ziegel nach einem beliebigen der vorhergehenden Ansprüche, **dadurch gekennzeichnet, dass** die elektrischen Anschlüsse Außen- und Innenverbindungselemente in den Montageelementen durch Zusammenfügen umfassen.

4. Ziegel nach einem beliebigen der vorhergehenden Ansprüche, **dadurch gekennzeichnet, dass** das Kontaktstück (57) einen Stecker bildet, der von seiner Überlappungskante (20) hervorsteht, und die Aufnahme (58) eine Steckdose bildet, die zurückgesetzt vom ihrer Überlappungskante (22) angeordnet ist.

5. Ziegel nach Anspruch 4, **dadurch gekennzeichnet, dass** das Kontaktstück (57) und die Aufnahme (58) im Wesentlichen senkrecht zur mittleren Ebene (P) des Ziegels (10) sind, wobei vorgesehen ist, dass diese Ebene parallel zur Ebene einer Dachplatte ist.

6. Ziegel nach einem beliebigen der vorhergehenden Ansprüche, **dadurch gekennzeichnet, dass** die photovoltaische Schicht (40) direkt mit der Umgebung in Kontakt ist.

7. Ziegel nach einem beliebigen der vorhergehenden Ansprüche, **dadurch gekennzeichnet, dass** die photovoltaische Schicht (40) ein Film ist, der an den Körper (12) des Ziegels (10) mit Hilfe eines flexiblen Klebers geklebt ist, der ermöglicht, differenzielle Dilatationen zwischen dem Körper (12) und dem Film zu absorbieren.

8. Ziegel nach Anspruch 7, **dadurch gekennzeichnet, dass** der Film, der die photovoltaische Schicht (40) bildet, in einem Hohlraum (12C) aufgenommen ist, der von der oberen Seite des Körpers (12) an seinem freien Ende zurückgesetzt ist, wobei die Tiefe des Hohlraums derart ist, dass die obere Seite des Films an einen peripheren Teil des freien Teils der oberen Seite des Körpers ansteht.

9. Ziegel nach einem beliebigen der Ansprüche 7 bis 8, **dadurch gekennzeichnet, dass** die obere Seite des Körpers (12), in ihrem Bereich, der vom photovoltaischen Film (40) abgedeckt ist, mindestens teilweise vom Kühlkanälen (42) ausgehöhlt ist, die lokal einen Durchgang von Luft zwischen dem Körper und dem photovoltaischen Film ermöglichen.

10. Ziegel nach Anspruch 9, **dadurch gekennzeichnet, dass** die Kühlkanäle (42) Streifen sind und der Körper (12) Entlüftungskanäle (44) festlegt, die einerseits in einen der Streifen (42) und andererseits in die untere Fläche (12A) des Ziegels (10) münden.

11. Ziegel nach einem beliebigen der Ansprüche 1 bis 6, **dadurch gekennzeichnet, dass** die photovoltaische Schicht (40) eine Schicht aus photovoltaischen Nanopartikeln ist.

12. Ziegel nach einem beliebigen der vorhergehenden Ansprüche, **dadurch gekennzeichnet, dass** der Körper (12) des Ziegels (10) aus Material auf der Grundlage von Polymer ist.

13. Ziegel nach Anspruch 12, **dadurch gekennzeichnet, dass** der Körper (12) des Ziegels (10) aus Polymermaterial keramisch gefüllt ist.

14. Ziegel nach einem beliebigen der Ansprüche 12 bis 13, **dadurch gekennzeichnet, dass** der Körper (12) des Ziegels (10) aus Material auf der Grundlage von Holz ist.

15. Ziegel nach einem beliebigen der vorhergehenden Ansprüche, **dadurch gekennzeichnet, dass** sein Körper (12) auf der Grundlage von Material ist, das ausgelegt ist, um bei der Abkühlung nach dem Formen oder bei einer Bildung unter Druck zu polymerisieren.

16. Ziegel nach einem beliebigen der Ansprüche 12 bis 14, **dadurch gekennzeichnet, dass** die obere Seite (12B) des Körpers (12) des Ziegels (10) mit einer Mineralschicht zum Schutz insbesondere vor ultravioletten Strahlen bedeckt ist.

17. Ziegel nach einem beliebigen der vorhergehenden Ansprüche, **dadurch gekennzeichnet, dass** der Ziegel (10) eine thermisch isolierende Schicht auf der unteren Seite (12A) des Körpers (12) umfasst.

18. Ziegel nach Anspruch 16, **dadurch gekennzeichnet, dass** die thermisch isolierende Schicht mit einer unteren Endbearbeitungsschicht bedeckt ist.

19. Ziegel nach einem beliebigen der vorhergehenden Ansprüche, **dadurch gekennzeichnet, dass** sein Körper (12) eine obere Halbschale (120A) und eine untere Halbschale (120B) umfasst, die einen Innenraum festlegen.

20. Ziegel nach Anspruch 19, **dadurch gekennzeichnet, dass** der Innenraum zwischen der oberen Halbschale (120A) und der unteren Halbschale (120B) mit einem Schaum gefüllt ist.

21. Ziegel nach einem beliebigen der vorhergehenden Ansprüche, **dadurch gekennzeichnet, dass** sein Körper (12) mindestens eine thermisch isolierende innere Schicht (160) einschließt.

22. Ziegel nach einem beliebigen der vorhergehenden Ansprüche, **dadurch gekennzeichnet, dass** sein Körper (12) ein elektronisches Gehäuse (170) zur Umwandlung von Gleichstrom in Wechselstrom einschließt.

23. Verfahren zur Herstellung eines photovoltaischen Ziegels nach einem beliebigen der Ansprüche 2 bis 22, wobei das Verfahren einen Schritt des Positionierens in einer Form der Leiter (54) umfasst, wovon mindestens ein Ende mit einem elektrischen Anschluss (52) versehen ist, und einen Schritt des Formens des Körpers (12) des Ziegels (10) in der Form, die die Leiter einschließt.

24. Verfahren nach Anspruch 23, **dadurch gekennzeichnet, dass** es einen Schritt des Positionierens einer photovoltaischen Schicht (40) in der Form vor dem Schritt des Formens des Körpers (12) umfasst.

25. Verfahren nach Anspruch 23, **dadurch gekennzeichnet, dass** es einen Schritt des Positionierens einer photovoltaischen Schicht (40) auf der oberen Seite (12B) des Körpers (12) nach dem Schritt des Formens und nach einem Schritt des Entfernens der Form vom Körper umfasst.

26. Verfahren zur Abdeckung eines Dachstuhls durch photovoltaische Ziegel nach einem beliebigen der Ansprüche 1 bis 22, wobei das Verfahren, nach der Anbringung auf der Platte des Dachstuhls mindestens eines ersten der Ziegel (10) das Annähern eines zweiten Ziegels umfasst (10), um seine obere Kante (20) mit Bezug auf der unteren Kante (22) des ersten Ziegels (10) zu positionieren, das Anbringen des zweiten Ziegels (10) benachbart vom ersten Ziegel (10) durch sein im Wesentlichen senkrechtes Annähern an die Ebene der Platte des Dachstuhls mit einerseits einer Überlappung der oberen Kante (20) des zweiten Ziegels auf der unteren Kante (22) des ersten Ziegels und andererseits im Wesentlichen senkrechtes Zusammenfügen zur Platte des Dachstuhls der Montageelemente durch Zusammenfügen (57, 58), um die Ziegel mechanisch zu halten und sie elektrisch miteinander zu verbinden.

27. Abdeckeinheit für ein Dach, umfassend eine Vielzahl von photovoltaischen Ziegeln, nach einem der Ansprüche 1 bis 22, wobei die obere Kante (20) eines der Ziegel (10) die untere Kante (22) mindestens eines der benachbarten Ziegel abdeckt, (10) wobei ihre elektrischen Anschlüsse (52) elektrisch verbunden werden.

## Claims

1. A photovoltaic tile for a roof including a plurality of said tiles, whereof at least two adjacent tiles overlap at least partially, comprising:
- a body (12) having overlapping edges constituting a top edge (20) and a bottom edge (22), the top edge (20) being configured to cover the bottom edge (22) of at least one of the adjacent tiles,
- a photovoltaic layer (40) placed on a free part of the upper face of the body outside the bottom edge, and
- electrical connectors (52) that are connected to the photovoltaic layer (40) via electrical conductors (54) to electrically connect the photovoltaic layers of at least two adjacent tiles (10) of the roof to one another,
**characterized in that** the electrical connectors (52) are contained withdrawn in assembly elements (57, 58) by nesting arranged on said overlapping edges (20, 22) to allow said overlapping edges a mutual position during the placement of two adjacent tiles (10) such that simultaneously, by the nesting of the assembly elements (57, 58), the electrical connectors (52) contained in these elements come into electrical contact with one another, and **in that** the assembly elements by nesting on the one hand comprise at least one stud (57) that protrudes from one of the top edge (20) or the bottom edge (22), and on the other hand comprise at least one housing (58) withdrawn in the other of the bottom edge (22) or the top edge (20), the electrical connectors (52) being withdrawn in their stud and from their housing.

2. The tile according to claim 1, **characterized in that** the conductors (54) are inside the body of the tile in their journey between the photovoltaic layer (40) in their electrical connector (52).

3. The tile according to any one of the preceding claims, **characterized in that** the electrical connectors include male and female connecting elements in the nesting assembly elements.

4. The tile according to any one of the preceding claims, **characterized in that** the stud (57) forms a plug protruding from its overlapping edge (20) and the housing (58) forms a socket arranged withdrawn from its overlapping edge (22).

5. The tile according to claim 4, **characterized in that** the stud (57) and the housing (58) are substantially perpendicular to the median plane (P) of the tile (10), this plane being provided to be parallel to the plane of a roof face receiving the tile.

6. The tile according to any one of the preceding claims, **characterized in that** the photovoltaic layer (40) is directly in contact with the environment.

7. The tile according to any one of the preceding claims, **characterized in that** the photovoltaic layer (40) is a film glued to the body (12) of the tile (10) via a flexible glue making it possible to absorb differential expansions between the body (12) and the film.

8. The tile according to claim 7, **characterized in that** the film making up the photovoltaic layer (40) is housed in a cavity (12C) withdrawn from the upper face of the body (12) at its free part, the depth of the cavity being such that the upper face of the film is flush with a peripheral part of the free part of the upper face of the body.

9. The tile according to any one of claims 7 to 8, **characterized in that** the upper face of the body (12), in its zone covered by the photovoltaic film (40), is at least partially hollowed out by cooling channels (42) allowing a local passage of air between the body and the photovoltaic film.

10. The tile according to claim 9, **characterized in that** the cooling channels (42) are striations and the body (12) determines air discharge conduits (44) emerging on the one hand in one of the striations (42) and on the other hand at the lower face (12A) of the tile (10).

11. The tile according to any one of claims 1 to 6, **characterized in that** the photovoltaic layer (40) is a layer of photovoltaic nanoparticles.

12. The tile according to any one of the preceding claims, **characterized in that** the body (12) of the tile (10) is made from a polymer-based material.

13. The tile according to claim 12, **characterized in that** the body (12) of the tile (10) made from a polymer material has a ceramic filler.

14. The tile according to any one of claims 12 to 13, **characterized in that** the body (12) of the tile (10) is made from a wood-based material.

15. The tile according to any one of the preceding claims, **characterized in that** its body (12) has a base of a material suitable for polymerizing upon cooling after molding or during pressure forming.

16. The tile according to any one of claims 12 to 14, **characterized in that** the upper face (12B) of the body (12) of the tile (10) is covered with a protective mineral layer, in particular protecting against ultraviolet rays.

17. The tile according to any one of the preceding claims, **characterized in that** the tile (10) includes a thermally insulating layer on the lower face (12A) of the body (12).

18. The tile according to claim 16, **characterized in that** the thermally insulating layer is covered with a lower finishing layer.

19. The tile according to any one of the preceding claims, **characterized in that** its body (12) includes an upper half-shell (120A) and a lower half-shell (120B) determining an inner space.

20. The tile according to claim 19, **characterized in that** the inner space between the upper half-shell (120A) and the lower half-shell (120B) is filled with a foam.

21. The tile according to any one of the preceding claims, **characterized in that** its body (12) contains at least one inner thermally insulating layer (160).

22. The tile according to any one of the preceding claims, **characterized in that** its body (12) contains an electronic unit (170) for converting direct current into alternating current.

23. A method for manufacturing a photovoltaic tile according to any one of claims 2 to 22, the method including a step for positioning, in a mold, conductors (54) whereof at least one end is provided with an electrical connector (52), and a step for molding the body (12) of the tile (10) in the mold containing the conductors.

24. The method according to claim 23, **characterized in that** it includes a step for positioning a photovoltaic layer (40) in the mold before the step for molding the body (12).

25. The method according to claim 23, **characterized in that** it includes a step for positioning a photovoltaic layer (40) on the upper face (12B) of the body (12) after the molding step and after a stripping step of the body.

26. A method for covering a carcass with photovoltaic tiles according to any one of claims 1 to 22, the method including, after the placement on a carcass face of at least a first of said tiles (10), approaching a second tile (10) in order to position its top edge (20) across from the bottom edge (22) of the first tile (10), placing the second tile (10) adjacent to the first tile (10) by approaching it substantially perpendicular to the plane of said carcass face with a superposition part of the top edge (20) of the second tile on the bottom edge (22) of the first tile and, furthermore, nesting substantially perpendicular to said carcass face of the nesting assembly elements (57, 58) to mechanically maintain said tiles and connect them electrically.

27. A roof covering assembly, including a plurality of photovoltaic tiles according to any one of claims 1 to 22, the top edge (20) of one of the tiles (10) covering the bottom edge (22) of at least one of the adjacent tiles (10) while having their electrical connectors (52) electrically connected.
